# EUROPEAN PATENT SPECIFICATION

(11) **EP 1 036 012 B1**
(45) Date of publication and mention of the grant of the patent: **11.09.2002**
(21) Application number: 98965724.2
(22) Date of filing: 03.12.1998
(51) Int. Cl.: B65D 45/32, B65D 41/02

(54) **RE-USABLE CLOSING CAP, PARTICULARLY FOR BOTTLES**
WIEDERVERWENDBARER VERSCHLUSS, INSBESONDERE FÜR FLASCHEN
BOUCHON DE FERMETURE REUTILISABLE, NOTAMMENT POUR BOUTEILLES

(30) Priority: 03.12.1997 IT BL970017 U
(43) Date of publication of application: 20.09.2000
(73) Proprietor: Montelvini Di A. Serena & C. S.A.S., 31040 Volpago del Montello (IT)
(72) Inventor: SERENA, Armando, I-31040 Venegazzù del Montello (IT); CELLI, Pierenzo, I-32032 Feltre (IT)
(74) Representative: Beszédes, Stephan G., Dr.
(86) International application number: EP9807756
(87) International publication number: WO99028206

(56) References cited:
- FR-A- 1 464 801
- GB-A- 2 271 764
- US-A- 3 025 990
- US-A- 3 231 123

## Description

The invention pertains to a closing cap, particularly for the closing of bottles and for the conservation of beverages, especially to be drunk gradually, i.e. of bottles that require to be opened initially and then more than once after the first opening of the closing cap.

A characteristic feature of the present invention is that of accomplishing a closing cap in plastic material, comprising a cap head equipped with a closing rim having two ring-shaped parts, the associable ends of which being preferably dovetail-shaped for their stable and removable housing and coupling into two seats of two wings which start from said rim and which can be deflected from said rim, in order to close said two ring-shaped parts on the shoulder of the opening on top of the neck of the bottle.

Currently used caps for bottles can be divided into two groups, a first group being constituted by the original caps applied by the manufacturer of the wine or other drink to preserve, and a second group being constituted by the caps that substitute the original one.

The original caps of the first group consist usually of corks applied by pressure into the bottle and pulled out with the proper corkscrew, which makes them notoriously unusable for a second time.

Other original corks are applied by pressure and used for sparkling wines and drinks, and fixed in the bottle by means of metal cages, whose loosening implies the ejection of the corks thanks to the pressure of the drink. Also in this case the original caps cannot be used again, since their manual inserting into the top of the bottle is difficult, or impossible.

Moreover, one of the main features of the corks is that of absorbing the flavour of the wine in the bottle. which is a further reason to avoid their use for other bottles.

The known prior art provides also original crown caps having an internal lining of cork or other gaskets. or applied, like crown caps. on the top of the bottle to hold a plastic capsule below.

Also in this case, the opening of the bottle involves the deformation of the original crown cap, which therefore cannot be used any further.

To overcome these drawbacks. the known prior art provides substitutive caps or corks. usually in plastic material, which are interchangeable for a rough closing of any open bottle.

More specifically, known substitute caps are those having a smooth shank or annular plastic ribs, which are to be inserted by pressure into the hole of the bottle, or those having a smooth crown rim, which are to be applied onto the top of the bottle with a proper pressure, assuring their connection and coupling on the rim of the bottle.

In both cases, the substitute caps assure a minimum protection of the wine or drink from the external agents, but they are not perfect for an optimal preservation of the remaining drink because of the small pressure exerted in the manual application on the bottle.

The known substitute caps cannot be used to preserve sparkling wine or drinks. since they have a small resistance to the internal pressure of the bottle.

Another drawback of the prior art is that of requiring the use of a second cap or cork, after using or ruining the original one.

FR 1.464.801 A discloses the closest prior art, namely a closing cap for bottles comprising a cap head having a ring-shaped part with two protrusions being capable of being inserted into holes of a wing which is hinged to a lateral closing wall.

US 3,231,123 discloses a closure for crown cork bottles comprising a plurality of rim sectors separated by radial incisions. The adjacent end faces of each pair of adjoining sectors are respectively formed with circumferentially directed snap fastener means for interlocking engagement with each other when said sectors are flexed radially inwardly at the time the cap is being applied to the bottle.

From US 3,025,990 a re-usable closure for the mouth of a bottle neck is known, this closure having an external bead about the mouth and an external shoulder about the neck spaced below the bead. The closure comprises a head engagable on said mouth, and holding means depending from said head and extending circumferentially about said neck. The holding means comprise a plurality of flexible elements depending from said head at spaced locations thereabout, and an angular band carried by said depending elements. The holding mean are formed with internal upwardly facing flange means being formed on said band for removable abutting engagement with the underside of said shoulder.

It is an object of the present invention to provide a cap or stopper for bottle closing, which can be used both as an original cap and as a substitute cap for subsequent openings and for a prompt re-use.

Another object of this invention is that of providing a cap that can be easily applied to the top of the bottle, also in case of sparkling drinks, without requiring the use of the expensive and complicated small metal cages both during the first application and during the following closings of the bottle containing the remaining drink.

Another object of this invention is that of providing the possibility of opening the bottle without using corkscrews or other devices both for the first opening and for the next ones.

A further object of the invention is that of providing the possibility of holding the pulled-out cap avoiding its falling to the ground, particularly in case of bottles with sparkling wine or drink, assuring therewith the best sanitary conditions.

A last but not least object of this invention is that of allowing the application of the cap on the bottle, both as an original cap and as a substitute cap, for a next use, without exerting any strain during the closing of the bottle, and, however, without adjustments or deformations of the original cap or stopper.

These and other objects are perfectly achieved with the closing cap according to the invention as defined in the appended chaims, as can be inferred from the following description of a preferred, but not exclusive, embodiment illustrated also by means of the attached drawings, in which:
- Fig. 1: shows a vertical view of the cap at issue, placed in a upside-down position for an easier graphic representation, and partly in axial section along the line I-I of Fig. 2;
- Fig. 2: shows a top view of the same device of Fig. 1, it being represented with a couple of wings casually open;
- Fig. 3: shows a top view of the same device along the line III-III of Fig. 1, it being represented with its wings open;
- Fig. 4: shows the same top view of the cap at issue of Fig. 3, but it is represented with its wings closed and joined with the upper ring of the neck of the bottle;
- Fig. 5: shows a top view of the above-mentioned cap, it being placed in its usual vertical position of use, besides that being represented with one wing open and the other closed;
- Fig. 6: shows a vertical view, partly in axial section of the cap at issue, it being applied to the neck of a bottle;
- Fig. 7: shows a vertical view, partly in axial section, of a first variation of the embodiment of the cap at issue;
- Fig. 8: shows a vertical and axial view of another capsule D to be applied to a modified cap;
- Fig. 9: shows a vertical view, partly axially, analogous to the view of Fig. 1, referred to the modified cap to contain the capsule D;
- Fig. 10: shows a vertical view, partly axially, of the modified cap which bears the capsule D.

In all drawings the same parts are indicated, or are understood as being indicated, with the same reference numerals.

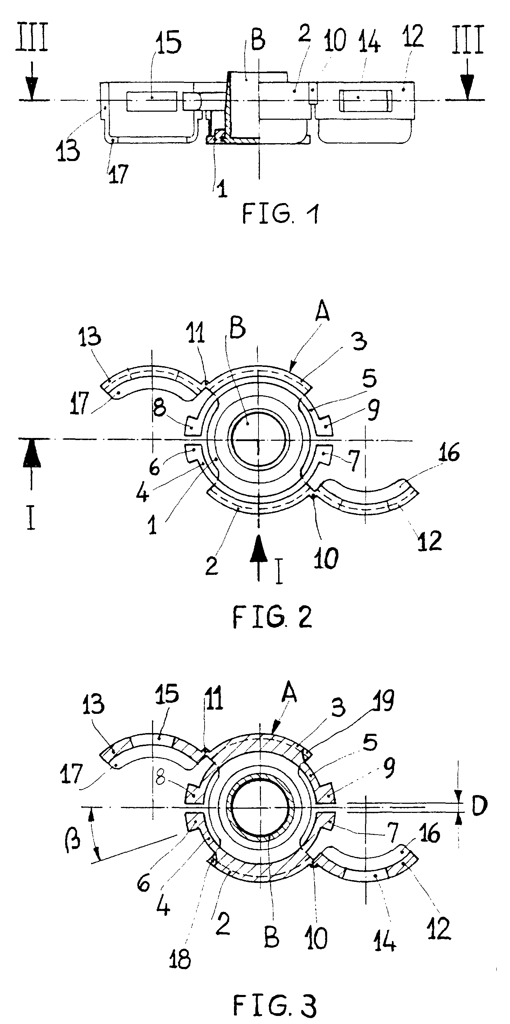

According the embodiment illustrated in Figs. 1 to 6, a cap A comprises a body in proper plastic material, its upper side 1 being round and crown-shaped, said upper side 1 being joined to two lateral closing walls 2 and 3 opposite to each other and starting from the same core, the circular crown-shaped side 1 being assembled to a capsule B, preferably accomplished with a different and proper plastic material, in order to assure its maximum elastic adherence to the internal neck of the bottle C.

To the lateral wall 2, a ring-shaped part 4 is fixed, while to the lateral wall 3 an opposite ring-shaped part 5 is fixed, both ring-shaped parts 4 and 5 being semicircular and with respective ends 6-7 and 8-9.

Each end 6-7 and 8-9 of the ring-shaped parts 4 and 5 has a reversed trapezoidal form, whose extreme side is placed in parallel to the transverse axis of the respective ring-shaped part 4 or 5 and properly spaced apart by a value D, and whose opposite sides are inclined according a value β.

It is important that the opposite and parallel sides of each couple of ends 6-8 and 7-9 present a sufficient distance D, since such distance D, besides allowing the opening of the closing walls 2 and 3 during the application of the cap A on the bottle, assures also a sufficient closing rate of the cap A, in conformity with what follows.

At the ends of each lateral closing wall 2 and 3, flexible projections 10 and 11 are provided to support the wings 12 and 13 and, acting like a hinge, to connect said wings 12 and 13 to the body A.

Said wings 12 and 13 are curved-shaped, having the same curvature radius of the lateral closing walls 2 and 3, said wings 12 and 13 being a detached portion of said lateral walls 2 and 3 and being fixed to them by means of the flexible projections 10 and 11.

The wings 12 and 13 are provided with through holes, respectively 14 and 15, having a radial opening and being so shaped that they can house a couple of ends 6-8 and 7-9 of the ring-shaped parts 4 and 5, as it is described below.

Said holes 14 and 15 present. besides the flaring of the lateral sides having a radial inclination, also a flaring in the upper and lower sides.

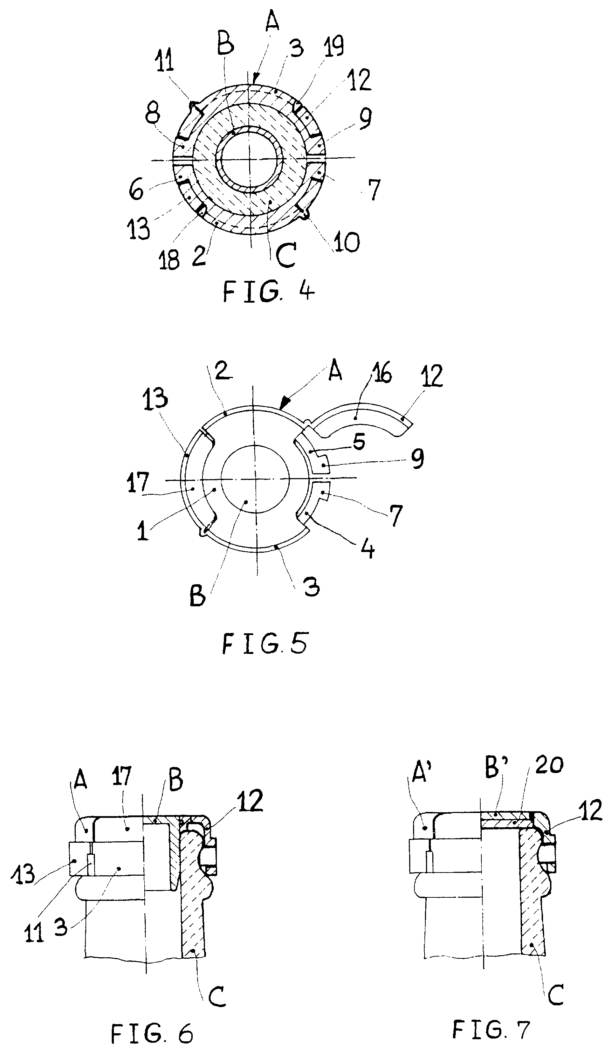

According to the embodiment of Fig. 1 to 6, the wings 12 and 13 are accomplished in such a form that they can comprise, besides the respective sides othogonal to the flat head 1, also a portion of the circular sector 16 and 17, both for an aesthetic function, apparent in Fig. 5, and for a better fixing of the wings 12 and 13, when they are closed as shown in Fig. 4.

In order to facilitate the fixing of the wings 12 and 13 even more, it is possible to provide openings 18 and 19 on the walls 2 and 3.

As described above, a capsule B is applied on the central hole of the circular crown of head 1 of the cap A, said capsule B being indicatively of the traditional type, that means accomplished with plastic material able to be fixed to the body A during the moulding of the whole cap.

The positioning and the fixing of the capsule B on the head 1 can be achieved by means of proper grooves accomplished on the hole of the head 1 and filled with fixing rings joined to the capsule B, or by means of chemical or mechanical adhesion of the capsule B on the side of its housing hole made on the head 1.

One of the features of the cap A at issue is that of presenting the possibility of being accomplished at the same time of its capsule B, even though it is made of a plastic material with different mechanical and chromatic characteristic, according to a known moulding technique.

After describing the parts of the device, its evident functional features, which allow the achievement of the mentioned objects, are summerized here below.

A cap A at issue, with its capsule B, is applied to the top of a bottle C, one the manufacturer has filled with wine or other drinks to preserve, said cap A having the wings 12 and 13 open enough to allow a better positioning, as shown by way of example in Fig. 2 and 3.

Once the capsule B has been housed in the hole of the bottle C, as shown in Fig. 6, the wings 12 and 13 are rotated around the respective supports 10 and 11 manually or with simple devices, till the respective holes 14 and 15 meet the couple of ends 7-9 and 6-8 of the ring-shaped parts 4 and 5.

Since the holes 14 and 15 of the wings 12 and 13 present lateral surfaces with radial openings and a proper flaring in the upper and lowest sides, a small strain is enough to overcome the resistance of the couples of ends 6-8 and 7-9 and to insert them into the respective holes 14 and 15, in order to fix them to the holes 14 and 15.

By joining the couples of ends 6-8 and 7-9, which form substantially a dovetail in the respective openings 14 and 15 of the wings 12 and 13, also the respective ring-shaped parts 4 and 5 are fixed, engaging the whole cap A to be locked on the shoulder of the top of the bottle C.

The presence of the capsule B, joined to the cap A, assures a very good preservation and protection of the wine or different drink, in conformity with the best quality of use of any traditional stopper or cap applied initially by the manufacturer of the drink.

During the opening of the bottle, without using opening devices, one or both wings 12 and 13 have just to be raised by loosening the respective couples of ends 6-8 and 7-9 so that the respective ring-shaped parts 4 and 5 open enough to get rid of the contact with the shoulder of the top of the bottle C.

Acting on the wings 12 and 13, the whole cap, with its included capsule B, is raised and the drink contained in the bottle C gets available.

Should some wine or drink be left in the bottle C, it is possible to use the same original cap again on the same bottle or on other bottles having a similar top for one or more successive uses.

It is obvious that the successive application will be identical with the first one, that means joining the ends 6-8 and 7-9 with the holes 14 and 15 of the wings 12 and 13, after re-inserting the capsule B into the top of the bottle.

It is obvious therefore that, with the innovation at issue, the cap or stopper A, initially applied by the manufacturer, can be used for an unlimited amount of times, eliminating the use of substitute caps, according to one of the above-mentioned objects.

From what till now described, it can be inferred that every application and disengagement of the cap at issue is very easy and it does not require particular devices, according to other aims of this innovation.

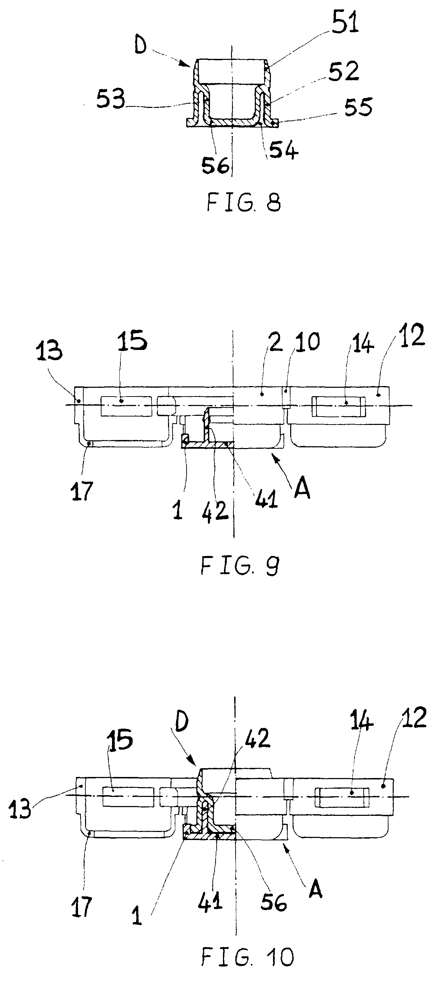

With reference to Fig. 7, as above specified, a first, and not preferred, variation of embodiment is represented.

According to the solution of Fig. 7, the capsule B can be eliminated and substituted with a plate 20 made of rubber or other material with an adequate elasticity and thickness, said plate 20 being placed on the internal side of the plate of head 1' of the cap A', in order to assure the lateral tightness by means of the ring-shaped parts 4 and 5, whose ends 6-8 and 7-9 are locked in the holes 14 and 15 of the wings 12 and 13, and in order that the cap A' itself presses adequately on the plate 20.

According to another embodiment, which has not been illustrated but is still obvious and functional, and which is not preferred, a cap A', having its head surface solid and not pierced, and having adequate thickness, can be used to be overlapped on a common capsule B, in order to avoid in any case its escape from the bottle.

With reference to Figs. 8 to 10 there is a further constructional variation of the invention.

According to this the head of the cap A beyond the flat head 1 is provided with a plain surface 41 to which is connected a cylindrical surface 42 which is suitably provided with a collar 51 and internal and/or external thickenings, shown in Fig. 9,

A capsule D is specifically realized with a collar 51 and two concentrical surfaces 52 and 53 able to delimit a circular space 54, the external cylindrical surface being provided with a border 55 and the internal surface 53 being provided with a stopper for reinforcement 56.

As can be seen from Fig. 10 the capsule 10 is stably fixed to cap A being inserted into it axially in the way that the cylindrical surface 42 is contained in the cylindrical space 54, there being retained by the roughness of the same cylindrical surface 42, whereas its head 55 is supported by the surface of the head 41 in order to be centered by the border 1.

Of course also the capsule D has been performed of plastic material sufficiently soft in order to allow its repeated insertion into the mouth of the bottles to be closed in several repetitions.

## Claims

1. Re-usable closing cap, particularly for bottles, comprising a cap head (1) equipped with two lateral dosing walls (2, 3) fixed to two ring-shaped parts (4, 5), the respective ends (6-8, 7-9) of said ring-shaped parts (4, 5) being capable of being inserted into and fixed in holes (14, 15) of wings (12, 13) which are hinged to said lateral dosing walls (2, 3), whereby the cap can be reciosed after initial opening by inserting the ends (6-8, 7-9) of said ring-shaped parts (4, 5) into said holes (14, 15) and fixing said ends (6-8, 7-9) in said holes (14, 15).

2. Re-usable dosing cap according to claim 1. **characterized by** the fact that the head (1) supports and houses the bottom of a common capsule (B) adapted to be inserted into the top of the bottle (C).

3. Re-usable closing cap according to any one of the preceding claims, **characterized by** the fact that the lateral walls (2, 3) comprise flexible projections (10, 11) to connect the wings (2, 3).

4. Re-usable dosing cap according to any one of the preceding claims, **characterized by** the fact that the ends (6-3, 7-9) of the ring-shaped parts (4, 5) present opposite surfaces separated by a distance (D), and/or that the ends (6-8. 7-9) of the ring-shaped parts (4, 5) have opposite sides inclined by an angle (β) to form joined couples of ends (6-8, 7-9) having a dovetail-shaped profile.

5. Re-usable closing cap according to any one of the preceding claims, **characterized by** the fact that the wings (12, 13) comprise holes (14, 15) having fiared sides able to house and hold or fix the respective ends (6-8, 7-9) of the ring-shaped parts (4, 5).

## Patentansprüche

1. Wiederverwendbarer Verschlussdeckel, insbesondere für Flaschen, umfassend einen Deckelkopf (1), ausgerüstet mit zwei seitlichen Verschlusswänden (2, 3), die an zwei ringförmigen Teilen (4, 5) befestigt sind, wobei die jeweiligen Enden (6-8, 7-9) der ringförmigen Teile (4, 5) in die Löcher (14, 15) der Flügel (12, 13) eingeführt und in diesen fixiert werden können, welche klappbar mit den seitlichen Verschlusswänden (2, 3) verbunden sind, wodurch der Deckel nach einem anfänglichen Öffnen wiederverschlossen werden kann durch Einführen der Enden (6-8, 7-9) der ringförmigen Teile (4, 5) in die Löcher (14, 15) und Fixieren der Enden (6-8, 7-9) in den Löchern (14, 15).

2. Wiederverwendbarer Verschlussdeckel nach Anspruch 1, **dadurch gekennzeichnet, dass** der Kopf (1) den Boden einer gemeinsamen Kapsel (B) trägt und aufnimmt, die dafür ausgelegt ist, um in den oberen Teil der Flasche (C) eingeführt zu werden.

3. Wiederverwendbarer Verschlussdeckel nach mindestens einem der vorhergehenden Ansprüche, **dadurch gekennzeichnet, dass** die Seitenwände (2, 3) flexible Vorsprünge (10, 11) zur Verbindung mit den Flügeln (2, 3) umfassen.

4. Wiederverwendbarer Verschlussdeckel nach mindestens einem der vorhergehenden Ansprüche, **dadurch gekennzeichnet, dass** die Enden (6-8, 7-9) der ringförmigen Teile (4, 5) durch einen Abstand (D) voneinander getrennte gegenüberliegende Oberflächen liefern und/oder dass die Enden (6-8, 7-9) der ringförmigen Teile (4, 5) in einem Winkel (β) geneigte gegenüberliegende Seiten aufweisen unter Bildung von aneinandergefügten Paaren der Enden (6-8, 7-9) mit einem schwalbenschwanzförmigen Profil.

5. Wiederverwendbarer Verschlussdeckel nach mindestens einem der vorhergehenden Ansprüche, **dadurch gekennzeichnet, dass** die Flügel (12, 13) die Löcher (14, 15) mit konisch erweiterten Seiten, welche die betreffenden Enden (6-8, 7-9) der ringförmigen Teile (4, 5) aufnehmen und halten oder fixieren können, umfassen.

## Revendications

1. Bouchon de fermeture réutilisable, notamment pour bouteilles, comprenant une tête de bouchon (1) équipée de deux parois de fermeture latérales (2, 3) fixées à deux parties en forme d'anneau (4, 5), les extrémités respectives (6-8, 7-9) desdites parties en forme d'anneau (4,5) pouvant être insérées et fixées dans les trous (14, 15) des ailes (12, 13) qui sont articulées sur lesdites parois de fermeture latérales (2,3), moyennant quoi le bouchon peut être refermé après l'ouverture initiale en insérant les extrémités (6-8, 7-9) desdites parties en forme d'anneau (4,5) dans lesdits trous (14, 15) et en fixant lesdites extrémités (6-8, 7-9) dans lesdits trous (14, 15).

2. Bouchon de fermeture réutilisable selon la revendication 1, **caractérisé en ce que** la tête (1) supporte et loge le fond d'une capsule ordinaire (B) adaptée pour pouvoir être insérée en haut de la bouteille (C).

3. Bouchon de fermeture réutilisable selon l'une quelconque des revendications précédentes, **caractérisé en ce que** les parois latérales (2, 3) comprennent des saillies flexibles (10, 11) pour relier les ailes (2, 3).

4. Bouchon de fermeture réutilisable selon l'une quelconque des revendications précédentes, **caractérisé en ce que** les extrémités (6-8, 7-9) des parties en forme d'anneau (4, 5) présentent des surfaces opposées séparées par une distance (D), et/ou que les extrémités (6-8, 7-9) des parties en forme d'anneau (4, 5) ont des côtés opposés inclinées selon un angle (β) pour former des paires d'extrémités jointes (6-8, 7-9) ayant un profil en forme de queue d'aronde.

5. Bouchon de fermeture réutilisable selon l'une quelconque des revendications précédentes, **caractérisé en ce que** les ailes (12, 13) comprennent des trous (14, 15) ayant des côtés évasés capables de loger et de maintenir ou de fixer les extrémités respectives (6-8, 7-9) des parties en forme d'anneau (4, 5).
